## Europäisches Patentamt

## European Patent Office

## Office européen des brevets

(11) Veröffentlichungsnummer: **0 523 436 A2**

# EUROPÄISCHE PATENTANMELDUNG

(21) Anmeldenummer: **92110943.5**

(51) Int. Cl.5: **F28F 27/00**

(22) Anmeldetag: **29.06.92**

(30) Priorität: **13.07.91 DE 4123243**

(43) Veröffentlichungstag der Anmeldung:
**20.01.93 Patentblatt 93/03**

(84) Benannte Vertragsstaaten:
**DE ES FR GB IT NL**

(71) Anmelder: **Degussa Aktiengesellschaft**
**Weissfrauenstrasse 9**
**W-6000 Frankturt am Main 1(DE)**

(72) Erfinder: **Heumüller, Richard**
**Schäfereimühle 2**
**W-8756 Kahl/Main(DE)**
Erfinder: **Meuser, Reinhold, Dr.**
**Magdalenenweg 9 a**
**W-5042 Erftstadt 12(DE)**
Erfinder: **Thiel, Otto**
**Albrecht-Dürer-Strasse 26**
**W-4000 Düsseldorf 31(DE)**

(54) Temperaturvariabler Rohrbündel-Wärmeaustauscher für konstante Mengenverhältnisse der Austauschgase und Wärmeaustauschverfahren.

(57) Es wird ein Rohrbündel-Wärmeaustauscher zur Beheizung eines Gases niedriger Temperatur mittels eines Gases hoher Temperatur bei vorgegebenem Mengenverhältnis beider Gase auf variable Temperaturen zwischen dem Auslegungsmaximum und einem darunter liegenden Wert vorgestellt, der zwischen Zu- und Abfuhrstutzen für das zu beheizende Gas im unteren Heizgas-anströmseitigen Gehäusebereich mindestens einen zusätzlichen Zufuhrstutzen für das Gas niedriger Temperatur hat und mit einer Einrichtung zur Mengenbemessung verbunden ist.

Fig. 1a

Rank Xerox (UK) Business Services

Die Erfindung betrifft einen Rohrbündel-Wärmeaustauscher zur Beheizung eines Gases niedriger Temperatur mittels eines Gases hoher Temperatur bei einem vorgegebenen konstanten Mengenverhältnis zwischen beiden Gasen auf variable Temperaturen zwischen dem Auslegungsmaximum und einem darunter liegenden Wert, insbesondere zur Reaktorluftvorwärmung bei der Furnacerußherstellung mittels rußbeladenem heißen Prozeßgas, bestehend bei vertikaler Aufstellung des Wärmeaustauschers aus einem unten und oben offenen, mit oben und unten seitlich mündenden Stutzen für Zu- und Abfuhr des zu beheizenden Gases versehenen Gehäuse, welches unten und oben durch je einen mit Bohrungen zur Aufnahme der Austauscherrohre versehenen Rohrboden verschlossen ist, in dem unteren und oberen Rohrboden gasdicht befestigten Austauscherrohren sowie im Anschluß an jeden Rohrboden mit dem Gehäuse verbundenen Gasführungsleitungen für das Heizgas.

Bei der Furnacerußherstellung wird im Reaktor der Brennstoff (Gas oder Öl) mit heißer Luft verbrannt, um die thermische Energie für die Spaltung des Rußrohstoffes in Ruß zu erzeugen. Um die Spaltreaktion abzustoppen und die Eintrittstemperatur für den nachfolgenden Wärmeaustauscher zur Reaktorluftvorwärmung auf 400 - 800° C einzustellen, wird das Prozeßgas durch Wassereinspritzung auf 750 - 960° C abgekühlt.

Das Gewichtsverhältnis zwischen Prozeßgasmenge (nach der Wassereinspritzung) und Reaktorluftmenge beträgt etwa 1,8 : 1; es läßt sich nicht ohne weiteres verändern. Dadurch bedingt kann man mit einem für 800° C Luftvorwärmung - diese Temperatur ergibt für viele Rußqualitäten gute Ausbeuten - ausgelegten Wärmeaustauscher niedrigere Lufttemperaturen bis ca. 400° C - wie sie für spezielle Ruße benötigt werden -nur mit sehr viel Wassereinspritzung erreichen, was für den Reaktor und die nachgeschalteten Apparaturen, wie Wärmeaustauscher und Filter und für die Weiterverwendung des Restgases, das nach der Rußabscheidung übrigbleibt, sehr nachteilig ist.

Kaltluftbeimischung durch einen Bypass zur Temperatursenkung kann nur in sehr engen Grenzen erfolgen, weil bei dem konstant zu haltenden Mengenverhältnis zwischen Prozeßgas und Reaktorluft bei den verbleibenden, sehr hohen und nahe der Belastungsgrenze für metallische Werkstoffe liegenden Temperaturen die Gefahr besteht, daß die Rohre des vor der Filteranlage angeordneten Wärmeaustauschers überhitzt und zerstört werden.

Angesichts des für die Erzeugung bestimmter Ruße feststehenden Gewichtsverhältnises zwischen Prozeßgas und Reaktorluft muß bei Kaltluftbeimischung ein Teil der im Wärmeaustauscher erwärmten, aus der Umgebung angesaugten und verdichteten Reaktorluft zur Beibehaltung des genannten Mengenverhältnisses abgeblasen werden, was hohen Energieverlust und teueren Regelungsaufwand bedeutet.

Aus diesen Gründen wird nun gemäß der Erfindung an einem für eine Luftvorwärmung auf 800° C ausgelegten Wärmeaustauscher zur Absenkung dieser Temperatur auf Werte zwischen 800 und 300, vorzugsweise zwischen 600 und 350, insbesondere auf 400° C, die Luftaufgabe im Gegenstrom so aufgeteilt, daß ein Teil der Luft stromabwärts von der eigentlichen und üblichen Aufgabestelle über eine geeignete Öffnung zugegeben wird. Dadurch verkleinert sich die Wärmeaustauschfläche für diesen später eingeführten Teil der Luft und die Vorwärmtemperatur sinkt ab; trotzdem wird der temperaturmäßig hochbeanspruchte Teil des Wärmeaustauschers noch gut gekühlt.

Gegenstand der Erfindung ist demgemäß ein Rohrbündel-Wärmeaustauscher zur Beheizung eines Gases niedriger Temperatur mittels eines Gases hoher Temperatur bei einem vorgegebenen konstanten Mengenverhältnis zwischen beiden Gasen auf variable Temperaturen zwischen dem Auslegungsmaximum und einem darunter liegenden Wert, insbesondere zur Reaktorluftvorwärmung bei der Furnacerußherstellung mittels rußbeladenem heißen Prozeßgas, bestehend bei vertikaler Aufstellung des Wärmeaustauschers aus einem unten und oben offenen, mit oben und unten seitlich mündenden Stutzen für Zu- und Abfuhr des zu beheizenden Gases versehenen Gehäuse, welches unten und oben durch je einen mit Bohrungen zur Aufnahme der Austauscherrohre versehenen Rohrboden verschlossen ist, in dem unteren und oberen Rohrboden gasdicht befestigten Austauscherrohren sowie im Anschluß an jeden Rohrboden mit dem Gehäuse verbundenen Gasführungsleitungen für das Heizgas.

Der Erfindungsgegenstand ist dadurch gekennzeichnet, daß zwischen Zu- und Abfuhrstutzen für das zu beheizende Gas im unteren heizgasanströmseitigen Gehäusebereich mindestens ein zusätzlicher Zufuhrstutzen für das Gas niedriger Temperatur mündet, der mit einer Einrichtung zur Mengeneinstellung verbunden ist.

Die Funktion des Wärmeaustauschers gemäß der Erfindung ist besonders günstig, wenn der zusätzliche Zufuhrstutzen mindestens unterhalb des halben Abstandes zwischen Zu- und Abfuhrstutzen für das zu beheizende Gag, vorzugsweise aber an einer Stelle, die vom Abfuhrstutzen für das zu beheizende Gas ausgemessen, 10 - 60, vorzugsweise 20 - 40, insbesondere 30 % des genannten halben Abstandes beträgt, angeordnet ist. Mit dieser Anordnung wird erreicht, daß ein Teilstrom der Gesamtmenge des zu beheizenden Gases nur einem beschränkten Wärmeaustausch unterworfen wird.

Die Zufuhr des später dem Wärmeaustausch unterworfenen Teilstroms gestaltet sich besonders günstig, wenn dafür gesorgt wird, daß dieser Teilstrom schnell und gleichmäßig auf den gesamten inneren Querschnitt des Wärmeaustauschergehäuses verteilt wird.

Nach vorzugsweisen und vorteilhaften Ausführungsformen der Erfindung können entweder mehrere zusätzliche Zufuhrstutzen sternförmig in mindestens einer Ebene liegend, angeordnet sein oder es kann mindestens ein zusätzlicher Zufuhrstutzen in einem auf dem Gehäuse aufgesetzten oder in dieses eingearbeiteten Ringkanal mit Gasdurchtrittsöffnungen zum Gehäuseinneren münden.

Einfach und dennoch effektiv ist eine Ausführungsform, bei der im unteren heizgasanströmseitigen Gehäusebereich drei in horizontaler Ebene liegende zusätzliche Zufuhrstutzen zur Verteilung des Gases niedriger Temperatur münden.

Ein weiterer Gegenstand der Erfindung betrifft ein grundsätzliches, d. h. nicht unbedingt an die beschriebene Rohrbündel-Wärmeaustauscherkonstruktion gebundenes Verfahren zur Beheizung eines Gases niedriger Temperatur mittels eines Gases hoher Temperatur bei einem vorgegebenen konstanten Mengenverhältnis zwischen beiden Gasen durch Wärmeaustausch im Gegenstrom auf variable Temperaturen zwischen dem Auslegungsmaximum und einem darunter liegenden Wert, insbesondere unter Einsatz des beschriebenen Rohrbündel-Wärmeaustauschers. Das Verfahren ist dadurch gekennzeichnet, daß man das zu beheizende Gas in zwei Ströme aufteilt, den einen Strom der insgesamt gegebenen Wärmeaustauschkapazität unterwirft und den Komplementärstrom nur einem Teil der gesamten Wärmeaustauschkapazität heizgasanströmseitig aussetzt und die gewünschte Endtemperatur des beheizten Gases durch Einstellen der Menge des Komplementärstromes vornimmt.

Schließlich betrifft die Erfindung noch die Verwendung des erfindungsgemäßen Rohrbündel-Wärmeaustauschers zur gezielten Reaktorluftvorwärmung mittels rußbeladenem heißen Prozeßgas bei der Furnacerußherstellung.

Bei der Furnacerußherstellung geschieht die gezielte Einstellung der Rußoberflächen im wesentlichen über das Verhältnis der insgesamt in den Rußreaktor eingebrachten thermischen Energie zu der nicht für die Energieerzeugung verbrauchten Rußrohstoffölmenge.

Je mehr Energie - z. B. über die Luftvorwärmung - in den Reaktor eingebracht wird, umso mehr Rußrohstoff kann bei ansonsten konstanten Mengenflüssen kontinuierlich thermisch zu Ruß umgewandelt werden. Als allgemein übliche Kennzahl dieses Verhältnisses gilt die sogenannte "Ölbeladung" eines Furnacerußreaktors. Sie hängt außer von der genannten Luftvorwärmung u. a. noch von der gewünschten Rußoberfläche, dem Rußrohstoff und von der Reaktorkonstruktion ab.

Jede Rußtype hat ihr individuelles Optimum der Verbrennungsluftvorwärmung. In aller Regel müssen aber in einer Produktionslinie verschiedene Rußtypen mit jeweils verschiedenen optimalen Luftvorwärmungen produziert werden. Eine Temperatureinstellung für die Luftvorwärmung ist bisher nur über die Quenchwassermenge, die in den Furnacereaktor gespritzt wird, möglich und daher sehr eingeschränkt Es gilt also die Regel, je höher die Luftvorwärmung, desto höher die mögliche Ölbeladung und desto höher die Produktionsleistung und die Rußausbeute.

Bei bestimmten Rußsorten ist jedoch das Ausmaß der Luftvorwärmung in einem gegebenen Reaktor begrenzt, da bei Überschreitung einer kritischen Ölbeladung Verunreinigungen in Form von Koks und Ölrückständen im Ruß auftreten.

Der erfindungsgemäße Rohrbündel-Wärmetauscher erlaubt in einer gegebenen Produktionsanlage eine erhöhte Flexibilität derart, daß die maximale Luftvorwärmung nicht durch die oben erwähnten, einzelnen Rußsorten generell niedrig gehalten werden muß, sondern daß bei allen anderen Rußsorten die Luft so weit vorgewärmt werden kann, daß die Herstellung wirtschaftlich optimal erfolgt.

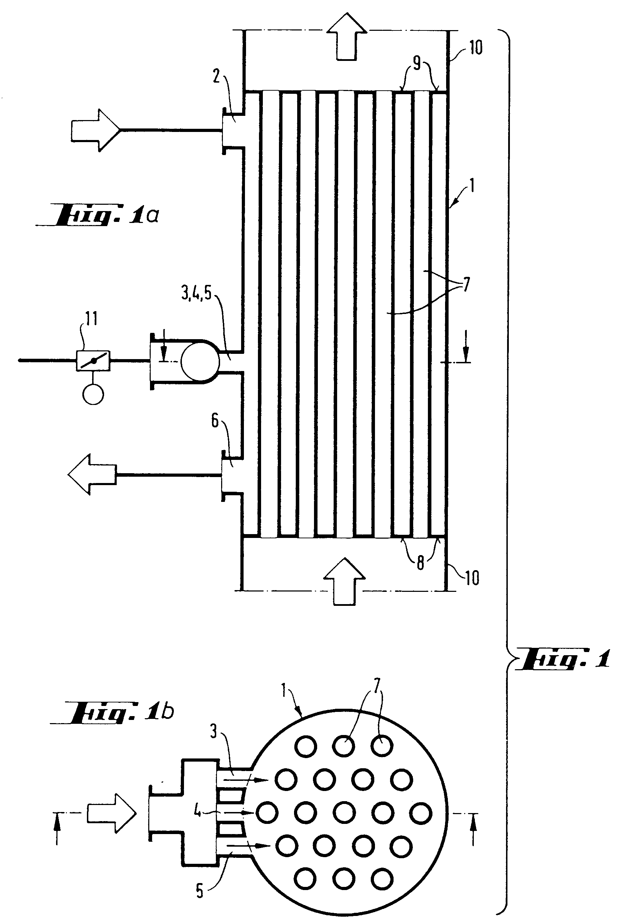

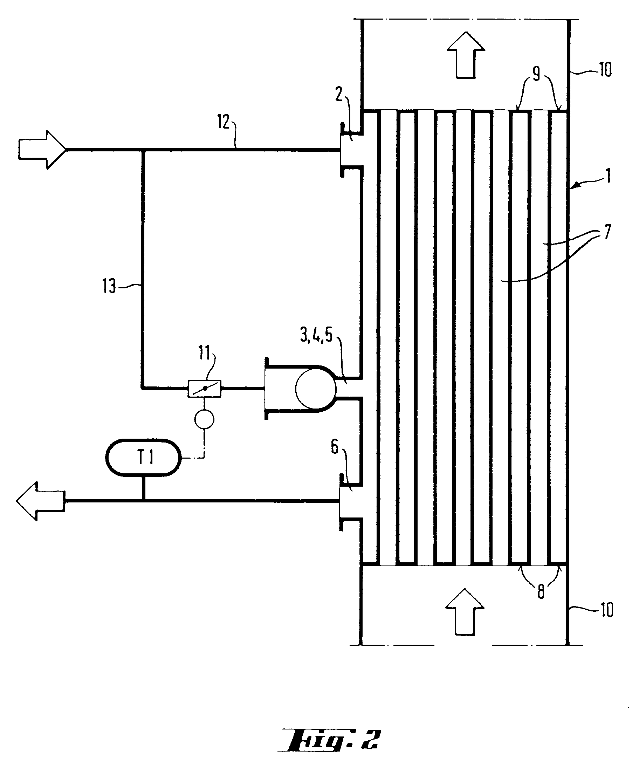

Die Erfindung wird nachfolgend anhand einer Funktionsbeschreibung eines in Figur 1 gezeigten erfindungsgemäßen Rohrbündel-Wärmeaustauschers und seiner in Figur 2 gezeigten Schaltung bei der thermischen Prozeßgasverwertung in einer Furnacerußanlage und des weiteren anhand eines Beispiels zur Herstellung eines Rußes weiter erläutert.

Gemäß Figur 1 (Fig. 1a und Fig. 1b) besteht eine bevorzugte Ausführungsform der erfindungsgemäßen Wärmeaustauscherkonstruktion aus einem unten und oben offenen Gehäuse 1, das mit einem seitlich oben mündenden Stutzen 2 und drei seitlich unterhalb mündenden Stutzen 3, 4 und 5 für die Zufuhr des zu beheizenden Gasen sowie einem seitlich unten mündenden Stutzen 6 für die Abfuhr des beheizten Gases versehen ist. Das Gehäuse ist unten und oben durch je einen mit Bohrungen zur Aufnahme der Austauscherrohre 7 versehenen Rohrboden 8 bzw. 9 verschlossen. Im Anschluß an jeden Rohrboden sind mit dem Gehäuse verbundene Gasführungsleitungen 10 für das Heizgas vorgesehen. Zwischen Zufuhrstutzen 2 und Abfuhrstutzen 6 für das zu beheizende Gas im unteren heizgasanströmseitigen Gehäusebereich münden drei Zufuhrstutzen 3, 4 und 5 für Gas niedriger Temperatur, die mit einer Einrichtung 11 zur Mengeneinstellung verbunden sind. Die genannten Zufuhrstutzen stehen mit einer Zufuhrleitung in Verbindung und sind so angeordnet, daß sie das Gas gleichmäßig um die Rohre des Wärmeaustauschers verteilen.

Das Verfahren gemäß Erfindung zur Einstellung der Temperatur des zu beheizenden Gases verläuft, wenn es in der vorstehenden Apparatur ausgeführt wird, wie folgt.

Das Gas niedriger Temperatur wird gemäß Figur 2 in zwei Ströme 12 und 13 aufgeteilt, der Teilstrom 12 der insgesamt gegebenen Wärmetauschkapazität unterworfen und der Komplementärstrom 13 nur einem Teil der gesamten Wärmeaustauschkapazität heizgasanströmseitig ausgesetzt. Die gewünschte Endtemperatur des beheizten Gases wird durch Einstellen der Menge des Komplementärstroms 13 mittels der Einrichtung 11 vorgenommen

Beispiel

Es wird die Herstellung eines Rußes in einer auf universelle Herstellbarkeit der gesamten Furnacerußpalette ausgelegten Anlage beschrieben, welche einen auf die vorkommende Höchstbelastung dimensionierten Wärmeaustauscher gemäß der Erfindung enthält.

Dabei werden zwei Produktionsläufe A (mit hoher Luftvorwärmung) und B (mit durch den erfindungsgemäßen Wärmeaustauscher abgesenkter Luftvorwärmung) miteinander verglichen. Lauf A wird mit auf 650° c vorgewärmter und Lauf B mit auf 350° C abgesenkter Reaktorluft durchgeführt. Beide Läufe werden mit derselben Reaktorluftmenge und Erdgasmenge durchgeführt. Die Einstelldaten sind bezüglich A und B auf den Erhalt von Rußen gleicher spezifischer Oberfläche und Struktur justiert. Der in der Tabelle angegebene Wert der Transmission ist die optische Lichtdurchlässigkeit eines toluolischen Rußauszuges. Je größer der angegebene Zahlenwert ist, desto geringer ist die unerwünschte Restölmenge, die sich auf dem Ruß befindet.

Während bei Lauf A eine geringe Transmission des Rußes resultiert und der Gritwert relativ hoch ist, wird bei B eine hohe Transmission und ein wesentlich geringerer Gritgehalt erreicht.

Nur die Qualität des Laufes B genügt in vollem Umfang den spezifizierten Erfordernissen.

Die Erzielung dieser gewünschten Wirkung wird durch geringere Luftvorwärmung in dem erfindungsgemäßen Wärmeaustauscher erreicht. Der Wärmeeintrag seitens der weniger vorgewärmten Luft wird dabei herabgesetzt und dadurch die Rußölbeladung gesenkt.

In einer auf universelle Herstellbarkeit einer großen Rußtypenpalette ausgelegten Produktionsanlage muß aufgrund des beispielgemäßen Rußes die Luftvorwärmung nicht generell begrenzt werden (im Beispiel 350° C). sondern kann bei Produktion diesbezüglich unempfindlicher Rußsorten auf deutlich höhere Temperaturen ausgeweitet und damit die Wirtschaftlichkeit erhöht werden.

Alle Daten gehen aus nachstehender Tabelle hervor und zeigen, daß mit dem erfindungsgemäßen Wärmeaustauscher auf einfache Weise die Rußqualität beeinflußt werden kann.

Tabelle

| | | | A | B |
|---|---|---|---|---|
| Reaktorluft-Menge | Nm$^3$/h | | 3500 | 3500 |
| Reaktorluft-Vorwärmung | $^0$ C | | 650 | 350 |
| Erdgasmenge | Nm$^3$/h | | 215 | 215 |
| Wärmeeintrag durch vorgewärmte Luft und Erdgas | MJ/h | | 3120 | 1620 |
| Gesamtenergieeintrag plus Verbrennungswärme Erdgas | MJ/h | | 10700 | 9200 |
| Rußrohstofföl | kg/h | | 1765 | 1708 |

| **Analytische Rußdaten** | | Sollwert | | |
|---|---|---|---|---|
| Transmission 425 nm nach DIN D 1618-83 | % | > 80 | 62 | 95 |
| Gritgehalt > 325 mesh nach DIN 53 580 | ppm | < 300 | 430 | 90 |

**Patentansprüche**

1. Rohrbündel-Wärmeaustauscher zur Beheizung eines Gases niedriger Temperatur mittels eines Gases hoher Temperatur bei einem vorgegebenen konstanten Mengenverhältnis zwischen beiden Gasen auf variable Temperaturen zwischen dem Auslegungsmaximum und einem darunter liegenden Wert, insbesondere zur Reaktorluftvorwärmung bei der Furnacerußherstellung mittels rußbeladenem heißen Prozeßgas, bestehend bei vertikaler Aufstellung des Wärmeaustauschers aus einem unten und oben offenen, mit oben und unten seitlich mündenden Stutzen für Zu- und Abfuhr des zu beheizenden Gases versehenen Gehäuse, welches unten und oben durch je einen mit Bohrungen zur Aufnahme der Austauscherrohre versehenen Rohrboden verschlossen ist, in dem unteren und oberen Rohrboden gasdicht befestigten Austauscherrohren sowie im Anschluß an jeden Rohrboden mit dem Gehäuse verbundenen Gasführungsleitungen für das Heizgas,
**dadurch gekennzeichnet,**
daß zwischen Zu- und Abfuhrstutzen für das zu beheizende Gas im unteren heizgasanströmseitigen Gehäusebereich mindestens ein zusätzlicher Zufuhrstutzen für das Gas niedriger Temperatur mündet, der mit einer Einrichtung zur Mengeneinstellung verbunden ist.

2. Rohrbündel-Wärmeaustauscher nach Anspruch 1,
**dadurch gekennzeichnet,**
daß der zusätzliche Zufuhrstutzen mindestens unterhalb des halben Abstandes zwischen Zu- und Abfuhrstutzen für das zu beheizende Gas, vorzugsweise aber an einer Stelle, die vom Abfuhrstutzen für das zu beheizende Gas ausgemessen, 10 - 60, vorzugsweise 20 - 40, insbesondere 30 % des genannten halben Abstandes beträgt, angeordnet ist.

3. Rohrbündel-Wärmeaustauscher nach Anspruch 1 oder 2,
**dadurch gekennzeichnet,**
daß mehrere zusätzliche Zufuhrstutzen sternförmig in mindestens einer Ebene liegend, angeordnet sind.

4. Rohrbündel-Wärmeaustauscher nach den Ansprüchen 1 bis 3,
**dadurch gekennzeichnet,**
daß mindestens ein zusätzlicher Zufuhrstutzen in einem auf dem Gehäuse aufgesetzten oder in dieses eingearbeiteten Ringkanal mit Gasdurchtrittsöffnungen zum Gehäuseinneren mündet.

5. Rohrbündel-Wärmeaustauscher nach den Ansprüchen 1 bis 4,
**dadurch gekennzeichnet,**
daß im unteren heizgasanströmseitigen Gehäusebereich drei in horizontaler Ebene liegende zusätzliche Zufuhrstutzen zur Verteilung des Gases niedriger Temperatur münden.

6. Verfahren zur Beheizung eines Gases niedriger Temperatur mittels eines Gases hoher Temperatur bei einem vorgegebenen konstanten Mengenverhältnis zwischen beiden Gasen durch Wärmeaustausch im Gegenstrom auf variable Temperaturen zwischen dem Auslegungsmaximum und einem darunter liegenden Wert, insbesondere unter Einsatz des Rohrbündel-Wärmeaustauschers nach vorstehenden Ansprüchen,
**dadurch gekennzeichnet,**
daß man das zu beheizende Gas in zwei Ströme aufteilt, den einen Strom der insgesamt gegebenen Wärmeaustauschkapazität unterwirft und den Komplementärstrom nur einem Teil der gesamten Wärmeaustauschkapazität heizgasanströmseitig aussetzt und die gewünschte Endtemperatur des beheizten Gases durch Einstellen der Menge des Komplementärstromes vornimmt.

7. Verwendung des Rohrbündel-Wärmeaustauschers nach den Ansprüchen 1 bis 5 zur gezielten Reaktorluftvorwärmung bei der Furnacerußherstellung mittels rußbeladenem heißen Prozessgas, insbesondere bei der Herstellung von Halbaktivrußqualitäten.

*Fig. 1a*

*Fig. 1b*

*Fig. 1*

**Fig. 2**